# EUROPEAN PATENT SPECIFICATION

(11) **EP 1 077 346 B1**
(45) Date of publication and mention of the grant of the patent: **22.11.2006**
(21) Application number: 00306973.9
(22) Date of filing: 15.08.2000
(51) Int. Cl.: F21S 8/10, B60Q 1/28, F21W 101/14, F21Y 101/02

(54) **Signal lamp with LED light sources**
Signalleuchte mit LED-Lichtquellen
Lampe de signalisation à diodes électroluminescents

(30) Priority: 19.08.1999 CZ 992951
(43) Date of publication of application: 21.02.2001
(73) Proprietor: Visteon-Autopal, s.r.o., 741 01 Novy Jicin (CZ)
(72) Inventor: Kubena, Vladimir, Novy Jicin 741 01 (CZ); Cejnek, Milan, Novy Jicin 741 01 (CZ); Prekrska, Pavlina, Suchdol nad Odrou 741 01 (CZ)
(74) Representative: Godwin, Edgar James

(56) References cited:
- EP-A- 0 416 253
- EP-A- 0 974 485
- US-A- 4 929 866
- PATENT ABSTRACTS OF JAPAN vol. 017, no. 427 (M-1459), 9 August 1993 (1993-08-09) & JP 05 089703 A (KOITO MFG CO LTD), 9 April 1993 (1993-04-09)

## Description

The present invention relates to automobile lamps that can be used in road traffic.

A conventional automobile lamp comprises a bulb, a reflector, and a cover glass.

Optical layouts of signal lamps provided with LED (Light Emitting Diode) light sources result from a light passage modification of the light emitted by a source placed within a reflector or behind an optic member, which member serves either only for collimation of the light beam or also for light distribution into the desired directions. EP-A-0 416 253 and US-A-4 929 866 disclose LED lamps in which light rays from LED sources impinge on a reflector whereby the light is redistributed in the required directions through a cover glass. The LED sources are arranged behind a mask which only partly obscures the LED sources when viewed from in front of the lamp.

The present invention provides a lamp as set forth in claim 1.

A signal lamp provided with LED light sources according to the present invention uses light of a LED light source and a reflector. This LED light source or sources are placed in a mask of a headlight or a lamp so that in a view along the headlight axis the LED light sources are not visible. The divergent light beam generated by an LED light source impinges on a reflector, where the rays are reflected. Thereby, light is distributed to the desired directions.

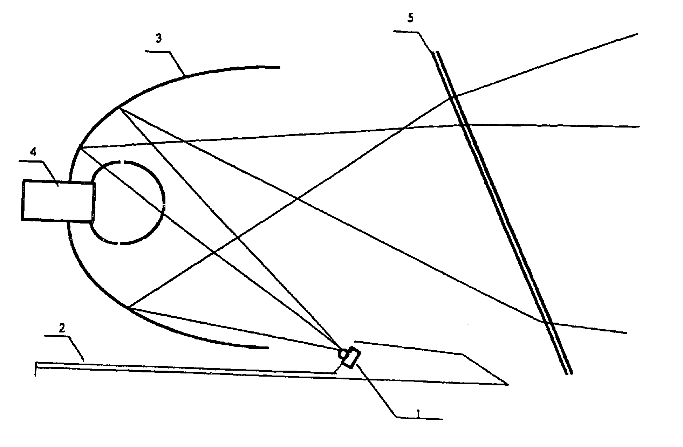

The present invention will now be described in a greater detail with reference to the accompanying drawing showing a side view of the mechanical and optical layout of a preferred embodiment of a signal lamp provided with LED light sources.

With reference to the drawing, a signal lamp according to the present invention uses one or more LED (Light Emitting Diode) light sources 1. The axis of each LED light source 1 is not parallel to the optical axis of a reflector 3. The LED light sources 1 are placed in a mask 2 of a headlight or lamp so that in front view into the headlight or lamp through a cover glass 5 the LED light sources 1 are not visible because the upper edge of the mask 2 is above the upper edge of the LED light sources 1. Light rays generated by the LED light sources 1 impinge on a reflector 3 and are reflected through the cover glass 5 in individual directions so that the lamp meets the requirements imposed on the given modes of operation by legal regulations. Another part of the optical layout is a bulb 4, for example of a low beam headlight. This provides a possibility to use the reflector for a headlight or lamp mode of operation as well as a signal lamp mode of operation.

The signal lamp with LED light sources can be used apart from other possibilities also as a front side lamp of transport vehicles in road traffic.

## Claims

1. A lamp comprising a bulb (4), a reflector (3), at least one light emitting diode light source (1), and a cover glass (5), and wherein the lamp functions as a signal lamp in which light rays generated by the at least one light emitting diode light source (1) impinge on the reflector (3) whereby the light is redistributed into the desired directions through the cover glass (5), **characterised in that** the at least one light emitting diode light source (1) situated in a mask (2) of the lamp so as to not be visible in a view directed into the lamp through the cover glass (5).

2. A lamp as claimed in claim 1, being a headlamp.

3. A lamp as claimed in claim 1, being a side lamp.

## Patentansprüche

1. Lampe, welche eine Glühbirne (4), einen Reflektor (3), mindestens eine Licht emittierende Diodenlichtquelle (1) und ein Abdeckglas (5) umfasst, und bei welcher die Lampe als eine Signallampe funktioniert, in welcher Lichtstrahlen, die durch die mindestens eine Licht emittierende Diodenlichtquelle (1) erzeugt werden, auf den Reflektor (3) auftreffen, wodurch das Licht durch das Abdeckglas (5) neu in die gewünschten Richtungen verteilt wird, **dadurch gekennzeichnet, dass** die mindestens eine Licht emittierende Diodenlichtquelle (1) derart in einer Maske (2) der Lampe angeordnet ist, dass sie nicht sichtbar ist einem Blick, welcher durch das Abdeckglas (5) hindurch in die Lampe hinein gerichtet ist.

2. Lampe gemäß Anspruch 1, welche ein Kopflampe ist.

3. Lampe gemäß Anspruch 1, welche eine Seitenlampe ist.

## Revendications

1. Lampe, comprenant une ampoule (4), un réflecteur (3), au moins une source de lumière à diode électroluminescente (1) et une glace de recouvrement (5), la lampe fonctionnant sous forme d'une lampe de signalisation dans laquelle les rayons de lumière produits par la au moins une source de lumière à diode électroluminescente (1) heurtent le réflecteur (3), la lumière étant ainsi redistribuée dans les directions voulues à travers la glace de recouvrement (5), **caractérisée en ce que** la au moins une source de lumière à diode électroluminescente (1) est située dans un masque (2) de la lampe, de sorte à ne pas être visible dans une vue dirigée dans la lampe à travers la glace de recouvrement (5).

2. Lampe selon la revendication 1, constituée par un projecteur.

3. Lampe selon la revendication 1, constituée par un feu latéral.
